# FASCICULE DE BREVET EUROPEEN

(11) **EP 4 040 734 B1**
(45) Date de publication et mention de la délivrance du brevet: **14.08.2024**
(21) Numéro de dépôt: 21305174.1
(22) Date de dépôt: 09.02.2021
(51) Int. Cl.: H04L 67/51, H04L 67/125, H04L 43/0811, H04L 43/103

(54) **PARTAGE OPTIMISÉ DE RESSOURCES ENTRE DES OBJETS IOT CONNECTÉS FORMANT UN RÉSEAU LOCAL**
OPTIMIERTE NUTZUNG VON RESSOURCEN ZWISCHEN VERBUNDENEN IOT-OBJEKTEN, DIE EIN LOKALES NETZWERK BILDEN
OPTIMISED RESOURCE SHARING BETWEEN CONNECTED IOT OBJECTS FORMING A LOCAL NETWORK

(43) Date de publication de la demande: 10.08.2022
(73) Titulaire: Bull SAS, 78340 Les Clayes-sous-Bois (FR)
(72) Inventeur: DEMEILLIEZ, Bruno, 38380 SAINT LAURENT DU PONT (FR)
(74) Mandataire: IPAZ

(56) Documents cités:
- EP-A1- 3 709 185
- US-A1- 2012 071 993

## Description

La présente invention concerne un procédé de partage efficace de ressources entre des objets connectés formant un réseau local. Elle concerne également un système mettant en oeuvre un tel procédé.

Le domaine de l'invention est le domaine de l'Internet des Objets (IoT), et en particulier celui de la gestion des ressources et des fonctionnalités dans le domaine des IoT.

### État de la technique

L'Internet des objets, ou Internet Of Things (IoT), est défini comme étant le réseau local formé par une pluralité d'objets, appelés objets connectés, qui sont interconnectés entre eux au sein d'un réseau local, sans passer par l'Internet.

L'IoT est un domaine en pleine expansion et ses domaines d'application sont de plus en plus variés : smart city, gestion intelligente d'une maison, monitoring d'installations, voitures autonomes, etc...

Les objets connectés peuvent communiquer au travers de sous-réseaux locaux, ces derniers pouvant être interconnectés entre eux grâce, par exemple, à l'Internet. Ainsi, les objets connectés peuvent communiquer entre eux dans le réseau local, et le réseau local peut communiquer avec d'autres réseaux locaux d'objets connectés, au travers d'Internet. Les objets connectés se trouvant au sein d'un réseau local peuvent être très variés et peuvent être prévus pour mettre en oeuvre des fonctions très différentes. Ainsi, les objets connectés au sein d'un réseau local peuvent par exemple comprendre des détecteurs de fumées, des appareils électroménagers, des serrures, des volets, des tablettes, etc. Chacun de ces objets est dédié à la réalisation d'au moins une fonction pour laquelle il est conçu. Ces exemples ne sont, bien entendu, pas limitatifs.

Actuellement, chaque objet connecté est dimensionné en ressources matérielles et/ou logicielles en considérant cet objet de manière individuelle et indépendante des autres objets connectés, que ce soit en terme de ressources de calcul, ressources de stockage, de capteurs, ressources de communication, etc. Cette conception de l'objet connecté peut rendre ledit objet connecté onéreux et complexe, à concevoir et à fabriquer. EP3709185 A1 décrit un système de gestion de ressources partagées de stockage distribué parmi des passerelles fournissant de la connectivité à des objets fournissant et /ou utilisant lesdites ressources partagées.

Un but de la présente invention est de remédier à cet inconvénient.

Un autre but de la présente invention est de proposer une solution de partage de ressource, matérielle ou logicielle, entre objets connectés permettant de diminuer le coût de fabrication et la complexité d'un objet connecté.

Un autre but de la présente invention est de proposer une solution de partage optimisé de ressources matérielle ou logicielle entre objets connectés.

### Exposé de l'invention

L'invention propose d'atteindre au moins un des buts précités par un procédé selon la revendication 1.

Ainsi, l'invention propose de mettre en oeuvre une unité de gestion pour piloter le partage de ressources, matérielles ou logicielles, au sein d'un réseau d'objets connectés au sein du réseau local. Cette unité de gestion permet de planifier et de gérer l'accès de chaque objet connecté aux ressources équipant les autres objets connectés et qui sont mises en partages au sein dudit réseau local : ces ressources étant listées dans la liste de ressources partagées.

De plus, et surtout, le procédé selon l'invention propose de surveiller l'état de connexion, à l'unité de gestion, du ou des objets connectés au sein du réseau local et ayant partagée au moins une de ses ressources. Ainsi, l'invention permet de détecter la panne, ou la déconnexion, d'un des objets connectés, ce qui permet d'ajuster de manière efficace le partage de ressources. Par exemple, et tel qu'il sera décrit plus bas, l'invention permet d'annuler un partage de ressource, préalablement planifié, lorsque l'objet connecté ayant partagé ladite ressource n'est plus joignable. En outre, l'invention permet de remplacer une ressource préalablement partagée par un objet connecté non joignable, par une ressource partagée par un autre objet connecté. Suivant encore un autre exemple, l'invention permet de libérer une ressource préalablement mise à disposition d'un objet connecté non joignable, et éventuellement l'attribuer à un autre objet connecté qui serait demandeur d'une telle ressource.

Ainsi, l'invention permet de réaliser un partage de ressource plus efficace entre objets connectés, et plus adaptée à la situation de chaque objet connecté au sein du réseau à un instant donné. L'invention permet ainsi de mieux exploiter les ressources partagées au sein du réseau local et d'ajuster le partage de ressource de manière plus fine en fonction de l'état de connexion à l'unité de gestion de chaque objet connecté du réseau local.

Il est à noter que, selon la présente invention, les ressources sont partagées au sein du réseau local formé par les objets connectés qui sont interconnectés entre eux, sans sortir dudit réseau local. Ainsi, le partage des ressources entre les objets connectés du réseau local ne nécessite pas de connexion à Internet mais uniquement une connexion à l'unité de gestion se trouvant au sein du réseau local. Autrement dit, le partage des ressources se fait localement.

L'unité de gestion permet de faire la liaison entre les objets connectés du réseau local pour l'utilisation partagée de ressources disponibles au sein dudit réseau local, au niveau de chaque objet connecté, de sorte que les ressources d'un objet connecté peuvent être utilisées pour les besoins d'un autre objet connecté.

Dans la présente invention, au moins une ressource qui équipe un objet connecté et qui peut être partagée par cet objet connecté avec d'autre objets connectés peut être une ressource matérielle ou une ressource logicielle, telle que par exemple :
- une ressource de calcul : par exemple un processeur ;
- une ressource de mémorisation, : par exemple une mémoire ;
- une ressource de communication : par exemple une interface de communication filaire ou non ;
- une ressource de mesure d'un paramètre : par exemple un capteur de température, un capteur de pression, etc. ;
- une ressource d'impression : par exemple une imprimante physique ;
- une ressource logicielle ou applicative : par exemple une application de cryptage, un logiciel de compression, une application de messagerie, etc.

Dans la suite, le terme « ressource » ou « ressource informatique » peut être utilisé pour désigner une ressource matérielle ou logicielle partagée au sein du réseau, sans perte de généralité.

De manière préférentielle, dans la présente invention, une ressource est dite « partagée » par un premier objet avec un deuxième objet, lorsqu'une opération de traitement de données, dite opération cible, est réalisée par ledit premier objet pour le compte dudit deuxième objet en utilisant cette ressource.

L'opération de traitement de donnée peut être réalisée immédiatement au moment où le deuxième objet émet une requête dans ce sens, lorsque la ressource pour réaliser cette opération de traitement de données est disponible immédiatement.

Alternativement, et de manière plus fréquente, l'opération de traitement de données est planifiée pour une réalisation ultérieure en fonction de la disponibilité de la ressource nécessaire à la réalisation de ladite opération. Dans ce cas, l'opération planifiée est mémorisée dans une liste de d'opérations planifiée qui peut être la liste des ressources partagée, ou une autre liste.

Lorsqu'une opération de traitement de données est planifiée pour être réalisée par un premier objet connecté pour le compte d'un autre objet connecté, alors la disponibilité de la ressource impliquée au sein du premier objet connecté est modifiée dans la liste des ressources partagées.

Selon l'invention, au moins une opération de traitement de données comprend, ou consiste en :
- une exécution d'une fonction identifiée : par exemple une fonction de cryptage de données ;
- une exécution d'un programme ou d'un logiciel : par exemple un antivirus ;
- un stockage de données ;
- une communication de données vers un dispositif local ou distant, par exemple au travers d'une interface de communication filaire ou sans fil, et en particulier au travers d'un réseau de type Internet ;
- une mesure d'une grandeur physique, telle que par exemple la température, la pression, un taux de monoxyde de carbone, l'hygrométrie, etc.

Suivant l'invention l'étape de surveillance de l'état de connexion de chaque objet connecté est réalisée par l'unité de gestion.

Ainsi, l'unité de gestion peut immédiatement et directement déterminer si l'objet connecté est joignable ou non, et n'est pas dépendant d'un autre dispositif à qui cette fonction serait confiée. De plus, une telle détermination est plus robuste car elle n'est pas impactée par une panne d'un dispositif externe qui serait en charge de surveiller l'état de connexion des objets connectés.

L'étape de surveillance de l'état de connexion d'au moins un, en particulier de chaque, objet connecté peut être réalisée à chaque réception d'une requête d'accès à une ressource partagée au sein du réseau local. Par exemple, lorsqu'un objet connecté demande à accéder à une ressource informatique partagée par un autre objet connecté, l'état de connexion de cet autre objet connecté est déterminé.

Alternativement, ou en plus, la surveillance de l'état de connexion d'au moins un, en particulier de chaque, objet connecté peut être réalisée à une fréquence donnée, fixée par exemple par un administrateur du réseau local. Par exemple, l'étape de surveillance peut être réalisée toutes les heures.

Alternativement, ou en plus, la surveillance de l'état de connexion d'au moins un, en particulier de chaque, objet connecté peut être réalisée en temps réel sous la forme d'une tâche de fond exécutée continuellement. Ainsi, l'état de connexion de chaque objet connecté sera connu en temps réel et la liste de ressource(s) partagée(s) peut être mise à jour en temps réel. Ainsi, le partage de ressources au sein du réseau local est optimisé et adapté en temps réel à l'état de connexion, à l'unité de gestion, des objets connectés formant le réseau.

L'état de connexion d'un objet connecté peut être surveillée par toute technique connue de l'homme du métier.

Suivant des exemples de réalisation nullement limitatif, la surveillance de l'état de connexion d'un objet connecté peut comprendre ou être réalisée par :
- un test de l'accessibilité dudit objet connecté, par exemple par une commande informatique de type Ping ; ou
- une surveillance d'un signal, dit de présence, émis par ledit objet connecté ;

Suivant des exemples de réalisation non limitatifs, le signal de présence émis par l'objet connecté peut être émise de manière continue, ou à fréquence déterminée, de sorte que, lorsque ledit signal n'est plus détecté par l'unité de gestion alors ledit objet connecté n'est plus accessible, et *vice versa.*

Dans tous les cas, la surveillance de l'état de connexion d'un, ou de chaque, objet connecté peut être réalisée au travers d'un canal de communication filaire ou sans fil.

Lorsque l'étape de surveillance détermine qu'un objet connecté n'est pas joignable, l'étape de mise à jour peut comprendre une modification, dans la liste, d'une donnée de disponibilité, ou d'une donnée de partage, d'au moins une ressource partagée par ledit objet, ou d'au moins une ressource mise en partage avec ledit objet connecté.

Dans le cas d'une ressource partagée par l'objet connecté, la donnée de disponibilité, ou la donnée de partage, peut être supprimée, ou modifiée, pour indiquer que ladite ressource partagée par ledit objet n'est plus disponible, ou n'est plus partagée, puisque l'objet n'est plus joignable par l'unité de gestion.

Dans le cas d'une ressource mise en partage avec l'objet connecté, la donnée de disponibilité, ou la donnée de partage, peut être modifiée pour indiquer que ladite ressource est à nouveau disponible pour un autre objet connecté dans le réseau local.

Lorsque l'objet connecté devient à nouveau joignable la donnée de disponibilité peut à nouveau être modifiée pour indiquer que ladite ressource est à nouveau disponible, ou partagée.

Par ailleurs, lorsque :
- l'étape de surveillance détermine qu'un premier objet connecté n'est pas joignable, et que
- une ressource dudit premier objet a été partagée avec un deuxième objet connecté ;
l'étape de mise à jour peut comprendre une modification dudit partage.

Le partage de ressource du premier objet avec le deuxième objet peut être en cours. Alternativement, le partage de ressource du premier objet avec le deuxième objet peut être un partage futur, c'est-à-dire un partage à venir programmé à une date future.

La modification du partage peut comprendre une annulation dudit partage.

Alternativement, et en particulier lorsque le partage est un partage futur, la modification peut être une mise en attente dudit partage pendant une durée ou jusqu'à une date ultérieure, qui peut par exemple être déterminée par rapport à ladite date future. Au bout de ladite durée, ou à ladite date ultérieure, si le premier objet n'est toujours pas joignable, alors le partage peut être annulé. Dans le cas contraire, le partage est maintenu.

Lorsque :
- la modification comprend une annulation du partage de ressource dudit premier objet connecté avec le deuxième objet connecté, et
- un troisième objet connecté a mis en partage une ressource disponible identique ou similaire à celle partagée par le premier objet connecté avec le deuxième objet connecté ;
alors le procédé peut comprendre une attribution de ladite ressource partagée par ledit troisième objet connecté avec ledit deuxième objet. Dans ce cas, la ressource partagée par le troisième objet peut être mise à la disposition du deuxième objet immédiatement dans le cas d'un partage en cours, ou programmé à ladite date future dans le cas d'un partage à venir.

En outre, lorsque :
- l'étape de surveillance détermine qu'un premier objet connecté n'est pas joignable, et que
- une ressource d'un deuxième objet a été partagée avec ledit premier objet connecté ;
l'étape de mise à jour peut comprendre une modification dudit partage.

Le partage de ressource du deuxième objet avec le premier objet peut être en cours. Alternativement, le partage de ressource du deuxième objet avec le premier objet peut être un partage futur, c'est-à-dire un partage à venir programmé à une date future.

La modification du partage peut comprendre une annulation dudit partage.

Alternativement, et en particulier lorsque le partage est un partage futur, la modification peut être une mise en attente dudit partage pendant une durée ou jusqu'à une date ultérieure, qui peut par exemple être déterminée par rapport à ladite date future. Au bout de ladite durée, ou à ladite date ultérieure, si le premier objet n'est toujours pas joignable, alors le partage peut être annulé. Dans le cas contraire, le partage est maintenu.

Lorsque :
- la modification comprend une annulation du partage de ressource dudit deuxième objet connecté avec le premier objet connecté, et que
- un troisième objet connecté a besoin de cette ressource ;
alors le procédé peut comprendre une attribution de ladite ressource dudit deuxième objet audit troisième objet connecté. Dans ce cas, la ressource partagée par le deuxième objet connecté peut être mise à la disposition dudit troisième objet immédiatement dans le cas d'un partage en cours, ou programmé à ladite date future dans le cas d'un partage à venir.

Suivant une caractéristique nullement limitative, la liste de ressource(s) partagée(s) peut comprendre, pour au moins une ressource partagée par un objet connecté, au moins une donnée relative à :
- une durée de disponibilité ;
- un horaire de disponibilité ;
- un taux de disponibilité ;
de ladite ressource.

Suivant une caractéristique avantageuse, lorsqu'une ressource partagée par un premier objet connecté est mise à la disposition d'un deuxième objet connecté, immédiatement ou à un moment ultérieur, la disponibilité de cette ressource peut être modifiée dans la liste de ressources partagées.

Par exemple, la ressource partagée peut être supprimée de la liste, au moins pendant son utilisation pour le compte du deuxième objet connecté, ou pendant une durée pendant laquelle elle est attribuée audit deuxième objet connecté. Dans ce cas, la liste de ressource partagées ne mentionne que les ressources disponibles à un instant donné.

Alternativement, une donnée de disponibilité associée à ladite ressource dans la liste des ressources partagées est modifiée pour modifier l'un quelconque des paramètres listés ci-dessus, à savoir, la durée, l'horaire ou le taux de disponibilité. Dans ce cas, la liste de ressources partagée mentionne toutes les ressources partagées, en indiquant pour chaque ressource leur disponibilité à un instant donné.

La disponibilité d'une ressource, matérielle ou logicielle, équipant un objet connecté peut être déterminée de plusieurs façons.

Suivant première solution, un progiciel installé au sein dudit objet connecté peut fournir des données concernant l'utilisation de chaque ressource dudit objet connecté. Ces données peuvent être utilisées pour déduire la disponibilité ou non de chaque ressource à un instant donné, dans ledit objet connecté ou par l'unité de gestion. A partir de ces données, il est donc possible d'établir, pour chaque ressource d'un objet connecté, un planning de disponibilité pour partager ladite ressource avec les autres objets connectés du réseau local.

Suivant une autre solution, il est possible de déployer au sein de l'objet connecté une ou de sondes logicielles permettant de réaliser des mesures système, par exemple à partir du système d'exploitation dudit objet connecté. Il existe un grand nombre d'applications logicielles de surveillance permettant de déployer ce type sonde, telles que par exemples les applications connues sous le nmon, perfmon, System Monitoring Lite, iKeyMonitor. L'utilisation de telle ou telle solution de monitoring peut dépendre du système d'exploitation de l'objet connecté. A partir des mesures effectuées par ces sondes il est possible de déterminer le taux, ou le niveau, d'utilisation de telle ou telle ressource au sein dudit objet connecté et donc d'établir un planning de disponibilité de ladite ressource pour être partagée avec les autres objets connectés du réseau.

Le niveau d'utilisation d'une ressource peut être un indicateur simple ou complexe. Dans le cas d'un capteur, il s'agit d'un indicateur simple indiquant s'il est ou non interrogé. Dans le cas d'une ressource telle que le CPU, il s'agit d'un indicateur complexe indiquant à la fois son niveau d'utilisation, mais également son niveau d'attente (« Wait ») ou encore le nombre de processus en attente de traitement. Dans le cas d'une ressource telle que les I/O disque, il s'agit là encore d'un indicateur complexe (nombre d'I/O en lecture, nombre d'I/O en écriture, Idle Time, Current Disk queue Length, etc.).

Un planning disponibilité peut être un planning quotidien ou un planning hebdomadaire, etc.

Suivant un autre aspect de la présente invention, il est proposé un système de partage de ressources entre objets connectés, selon la revendication 8, ledit système comprenant :
- plusieurs objets connectés, interconnectés entre eux, et formant un réseau local, et
- une unité de gestion, connectée à chacun desdits objets connectés, au sein dudit réseau local ;
configurés pour mettre en oeuvre toutes les étapes du procédé selon l'invention.

En particulier, l'unité de gestion peut être configurée pour mettre en oeuvre les étapes du procédé selon l'invention.

Suivant un mode de réalisation, l'unité de gestion peut être installée dans, ou peut être formée par, un appareil dédié se trouvant au sein du réseau local. Dans ce cas, cet appareil n'est pas prévu pour réaliser une autre fonction ou une autre tâche, par opposition aux objets connectés se trouvant dans le réseau.

Alternativement, l'unité de gestion peut être installée dans un objet connecté se trouvant dans le réseau local, et prévu et conçu pour réaliser au moins une autre tâche, de manière similaire aux objets connectés se trouvant dans le réseau local.

Suivant encore une autre alternative, l'unité de gestion peut être installée dans un autre objet, tel que par exemple une passerelle ou un point d'accès, se trouvant dans le réseau local, et relié à chacun des objets dudit réseau local.

Avantageusement, au moins un objet connecté peut comporter un module logiciel, dit client, pour déterminer au moins une donnée de disponibilité d'au moins une ressource dudit objet connecté et pouvant être partagée au sein du réseau local.

Un tel module client peut être configuré pour surveiller la nature et/ou la quantité de ressources utilisée au sein dudit objet connecté pour la réalisation des tâches pour lesquelles ledit objet connecté est prévu. Ainsi, il est possible de déterminer les périodes pendant lesquelles une ressource dudit objet connecté n'est pas utilisée, ou est peu utilisée, par ledit objet connecté et est donc disponible pour réaliser des opérations pour le compte d'autres objets connectés.

Pour au moins un objet connecté, un tel module logiciel peut être natif.

Pour au moins un objet connecté, un tel module peut être déployé dans ledit objet connecté ultérieurement, par exemple par l'unité de gestion.

En particulier, le système selon l'invention peut comprendre :
- au sein de chaque objet connecté, un module logiciel, dit module client, pour déterminer la disponibilité dudit objet connecté, et en particulier la disponibilité d'une ou de plusieurs ressources équipant ledit objet connecté, et
- au sein de l'unité de gestion, un module logiciel, dit module central, en communication avec chacun desdits modules clients ;
de sorte à déterminer et mettre à jour la liste ressources partagées.

Un objet connecté au sens de la présente invention peut être tout objet connecté.

Par exemple, les objets connectés peuvent être des objets connectés présents dans une habitation tel qu'une alarme, une centrale de contrôle de volets roulant, un appareil électroménager, etc. formant un réseau local au sein de ladite habitation.

Suivant un autre exemple, les objets connectés peuvent être des objets connectés présents dans un lieu professionnel, dans un lieu public, etc. Les modes de réalisation préférés sont selon les revendications dépendantes.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé selon l'invention ;
- la FIGURE 2 est une représentation schématique d'un exemple de réalisation non limitatif d'un système selon l'invention ; et
- la FIGURE 3 est une représentation schématique d'un autre exemple de réalisation non limitatif d'un système selon l'invention.

Il est bien entendu que les modes de réalisation qui seront décrits dans la suite ne sont nullement limitatifs et la portée de l'invention est donnée par les revendications. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

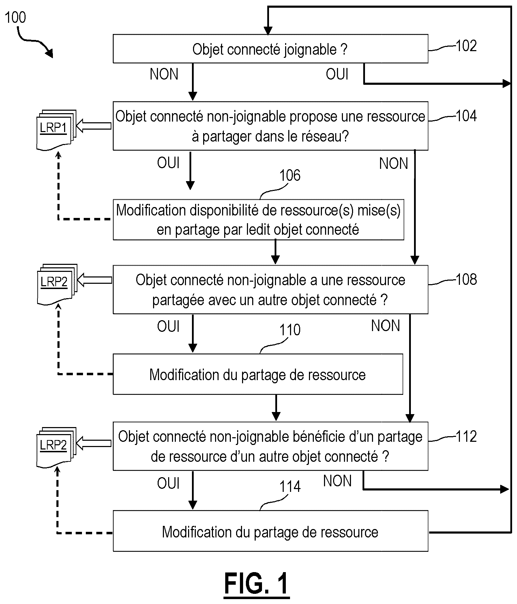

La FIGURE 1 est une représentation schématique d'un exemple de réalisation non limitatif d'un procédé selon l'invention.

Le procédé 100, représenté sur la FIGURE 1, peut être utilisé pour mutualiser les ressources dans un réseau local comprenant au moins deux objets connectés.

Le procédé 100 comprend une étape 102 lors de laquelle une unité de gestion, relié à chacun des objets connectés dudit réseau local, interroge un premier objet connecté pour déterminer si ce premier objet connecté est joignable ou non.

Si l'objet connecté est joignable, le procédé 100 peut s'arrêter.

Dans le cas contraire, c'est-à-dire que si le premier objet connecté n'est pas joignable, l'unité de gestion détermine lors d'une étape 104 si ce premier objet connecté a mis en partage une ressource matérielle ou logicielle. Pour ce faire, l'unité de gestion consulte une ou plusieurs listes de ressources partagées LRP1. Par exemple, cette liste LRP1 peut mentionner que la ressource R du premier objet connecté est proposée à une partage avec tout objet connecté au sein du réseau ayant besoin de ladite ressource. Cette liste de ressources partagées LRP1 peut être tenue par l'unité de gestion elle-même, en fonction de données reçues de la part de chacun des objets connectés formant le réseau local. Préférentiellement, cette liste LRP1 est mémorisée au niveau de l'unité de gestion de sorte qu'elle lui est immédiatement accessible, à tout moment.

Si la liste de ressources partagées LRP1 ne comporte aucune ressource proposée à un partage par le premier objet connecté, alors le procédé 100 continue avec une étape 108 décrite plus bas.

Si, au contraire, la liste de ressources partagées LRP comporte au moins une ressource partagée par le premier objet connecté, alors le procédé 100 comprend une étape 106 lors de laquelle la disponibilité de cette ressource partagée est modifiée, par exemple par mise à jour de ladite liste LRP1. La modification peut consister en, ou comprendre, l'une quelconque des actions suivantes :
- suppression de la ressource concernée de la liste LRP1 de sorte que ladite liste ne mentionne plus cette ressource ;
- modification d'une donnée de disponibilité de ladite ressource mémorisée dans ladite liste LRP1, pour signaler que ladite ressource n'est plus disponible ou n'est plus en partage, ou n'est plus joignable ;
- etc.

Lors d'une étape 108, le procédé 100 détermine si une ressource mise en partage par le premier objet connecté fait l'objet d'un partage actuel, ou d'un partage futur, au profit d'un deuxième objet connecté, par consultation d'une liste LRP2 dans laquelle ce partage est listé. Par exemple, cette liste LRP2 peut mentionner que la ressource R1 du premier objet connecté est mise à la disposition du deuxième objet connecté, pour une durée D1, à l'heure H1. Cette liste LRP2 peut être tenue par l'unité de gestion elle-même, et peut être mémorisée au niveau de l'unité de gestion.

Si ce n'est pas le cas, après l'étape 108, le procédé se poursuit par une étape 112, décrite plus loin.

Dans le cas contraire, le procédé 100 comprend une étape 110 de modification de ce partage. La modification peut comprendre une annulation dudit partage, par mise à jour de la liste LRP2, soit en supprimant ladite ressource de ladite liste LRP2, soit en modifiant une donnée de partage qui est mémorisée en association avec ladite ressource dans ladite liste LRP2.

Lorsque le partage est un partage futur, la modification peut être une mise en attente dudit partage pendant une durée ou jusqu'à une date ultérieure, qui peut par exemple être déterminée par rapport à ladite date future, en modifiant une donnée mémorisée dans la liste LRP2. Au bout de ladite durée, ou à ladite date ultérieure, si le premier objet n'est toujours pas joignable, alors le partage peut être annulé. Dans le cas contraire, le partage est maintenu.

Lorsque :
- la modification comprend une annulation du partage de ressource dudit premier objet connecté avec le deuxième objet connecté, et
- un troisième objet connecté a mis en partage une ressource disponible identique ou similaire à celle partagée par le premier objet connecté avec le deuxième objet connecté. Une telle ressource partagée par un troisième objet peut être identifiée par consultation de la liste LPR1, par exemple ;
alors le procédé 100 peut comprend une étape (non représentée) lors de laquelle la ressource partagée par ledit troisième objet connecté est attribuée audit deuxième objet connecté. La ressource partagée par le troisième objet peut être mise à la disposition du deuxième objet immédiatement dans le cas d'un partage en cours, ou programmé à ladite date future dans le cas d'un partage à venir. La liste LPR2 peut être mise à jour pour signaler ce nouveau partage.

Lors d'une étape 112, le procédé 100 détermine si une ressource d'un deuxième objet connecté a été mise en partage avec le premier objet dans le cadre d'un partage actuel, ou d'un partage futur, par consultation de la liste LRP2. Par exemple, cette liste LRP2 peut mentionner que la ressource R2 du deuxième objet connecté est mise à la disposition du premier objet connecté, pour une durée D2, à l'heure H2.

Si ce n'est pas le cas, le procédé 100 peut se terminer à la suite de l'étape 112.

Dans le cas contraire, le procédé 100 comprend une étape 114 de modification de ce partage. La modification peut comprendre une annulation dudit partage, par mise à jour de la liste LRP2, soit en supprimant la ressource concernée de ladite liste LRP2, soit en modifiant une donnée de partage qui est mémorisée en association avec ladite ressource dans ladite liste LRP2.

Optionnellement, lorsque le partage est un partage futur, la modification peut être une mise en attente dudit partage pendant une durée ou jusqu'à une date ultérieure, qui peut par exemple être déterminée par rapport à ladite date future. Au bout de ladite durée, ou à ladite date ultérieure, si le premier objet n'est toujours pas joignable, alors le partage peut être annulé. Dans le cas contraire, le partage est maintenu.

Lorsque :
- la modification comprend une annulation du partage de ressource dudit deuxième objet connecté avec le premier objet connecté, et que
- un troisième objet connecté a besoin de cette ressource ;
alors le procédé peut comprendre une étape (non représentée) attribuant ladite ressource dudit deuxième objet audit troisième objet connecté. Dans ce cas, la ressource partagée par le deuxième objet est mise à la disposition dudit troisième objet immédiatement dans le cas d'un partage en cours, ou programmé à ladite date future dans le cas d'un partage à venir. La liste LPR2 peut être mise à jour pour signaler ce nouveau partage.

Après l'étape 114, le procédé 100 peut se terminer.

Le procédé 100 peut préférentiellement être réalisé pour tous les objets connectés du réseau local d'objets connectés, à tour de rôle ou en même.

Le procédé 100 peut être réitéré à fréquence donné, sur requête ou, en tant que tâche de fond, pour chaque objet connecté.

Ainsi, le procédé 100, et plus généralement le procédé selon l'invention, met en oeuvre un partage de ressource(s) optimisé au sein d'un réseau local d'objets connectés.

Dans l'exemple donné, le procédé 100 utilise deux listes différentes LRP1 et LRP2. Bien entendu, le procédé selon l'invention peut utiliser une seule liste LRP réunissant les données mémorisées dans les listes LRP1 et LRP2.

De plus, dans certains modes de réalisation, le procédé selon l'invention peut ne comprendre que les étapes 104-106 et/ou 108-110 et/ou 112-114.

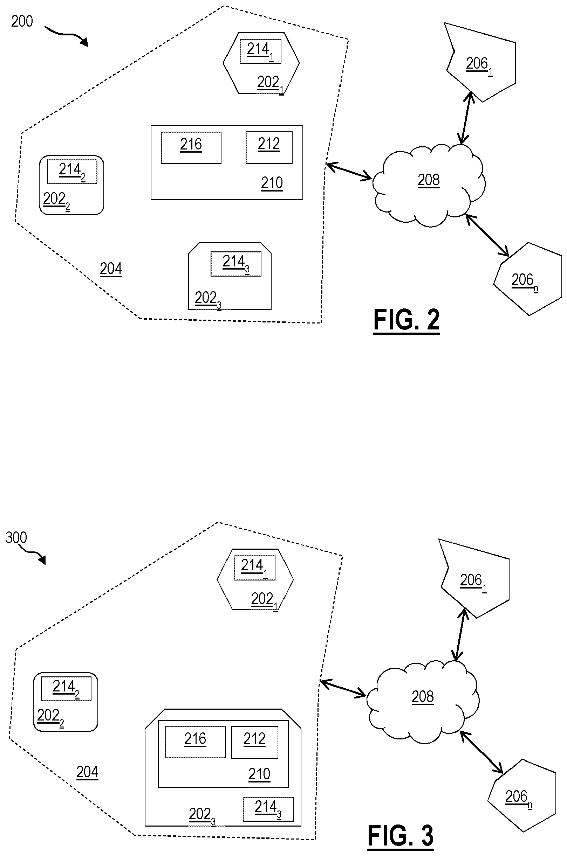

La FIGURE 2 est une représentation schématique d'un exemple de réalisation non limitatif d'un système selon l'invention.

Le système 200, représenté sur la FIGURE 2, peut être utilisé pour la mise en oeuvre d'un procédé de partage de ressources au sein d'un réseau local d'objets connectés, en particulier le procédé 100 de la FIGURE 1 ou ses variantes telles que décrites plus haut.

Dans l'exemple représenté, le système 200 comprend au total trois objets connectés 202₁, 202₂, 202₃, également désignés par la référence 202ᵢ ou 202 dans la suite. Bien entendu, le nombre d'objets connectés n'est pas limité à 3 et peut être supérieur ou égal à 2.

Les objets connectés 202 forment un réseau local 204 et sont interconnectés entre eux. Autrement dit, chaque objet connecté 202ᵢ est en communication avec chacun des autres objets connectés 202ᵢ.

Chaque objet connecté 202ᵢ réalise une ou plusieurs tâches pour lesquelles il est conçu et comprend au moins une ressource matérielle et/ou au moins une ressource logicielle. Dans l'exemple décrit, et de manière nullement limitative, les objets connectés 202ᵢ peuvent être des objets connectés se trouvant au sein d'une habitation, tel qu'une alarme, un appareil électroménager, etc. formant un réseau local 204 au sein de ladite habitation.

Le réseau local 204 peut être connecté à un ou plusieurs autres réseaux 206₁-206ₙ, locaux ou non, par exemple au travers d'un réseau de communication 208 tel que le réseau Internet.

Le système 200 selon l'invention comprend en outre une unité de gestion 210, en communication avec chacun des objets connectés 202₁-202₃. Cette unité de gestion est configurée pour mettre en oeuvre toutes les étapes du procédé selon l'invention et en particulier du procédé 100 de la FIGURE 1.

En particulier, l'unité de gestion 210 peut être configurée pour :
- surveiller l'état de connexion, à ladite unité de gestion 210, de chaque objet connecté 202ᵢ ;
- mettre à jour au moins une liste de ressource(s) partagée(s) lorsque ladite liste mentionne :
   ▪ une ressource que ledit objet propose au partage, ou
   ▪ une ressource partagée par un autre objet connecté avec ledit objet connecté.

L'unité de gestion 210 peut en outre être configurée pour établir un planning de disponibilité d'au moins une ressource, logicielle ou matérielle, d'un ou plusieurs objets connectés 202ᵢ pour être partagée avec au moins un autre objet connecté 202ᵢ du réseau local 204, c'est-à-dire pour réaliser des opérations pour le compte d'un autre objet connecté 202ᵢ au sein dudit réseau local 204. Pour ce faire, l'unité de gestion 210 peut comprendre un module logiciel central de planning 212, en particulier logiciel, et déployer dans chaque objet connecté 202₁-202₃ un module logiciel client, respectivement 214₁-214₃. Chaque module client 214ᵢ équipant un objet connecté 202ᵢ a pour fonction de surveiller l'utilisation des ressources dont est dotées ledit objet connecté 202ᵢ et renseigner le module central 212 de sorte que ledit module central 212 peut établir un planning de disponibilité de chaque ressource au sein de chaque objet connecté.

Suivant une alternative, pour au moins un objet connecté 202ᵢ, le module client 214ᵢ peut être un module natif présent dans ledit objet connecté 202ᵢ de sorte qu'il n'est pas déployé par l'unité de gestion.

L'unité de gestion 210 peut en outre être configurée pour attribuer une ressource partagée par un des objets connectés au sein du réseau local à un autre objet connecté dudit réseau local, dans le cadre d'un partage immédiat, ou d'un partage futur, en particulier pour une durée donnée. Ce partage peut être mémorisé dans une liste de ressources partagées. Pour ce faire, l'unité de gestion peut comprendre un module de planification de partage 216, en particulier logiciel.

Surout, l'unité de gestion 210 comprend un module 218 de surveillance de l'état de connexion, à ladite unité de gestion, de chaque objet connecté 202ᵢ.

Un tel module 218 peut par exemple être configuré pour émettre, sur demande ou à une fréquence prédéterminée, une commande de type « Ping » à destination de chaque objet connecté 202ᵢ pour déterminer si ledit objet connecté 202ᵢ est joignable ou non, par l'unité de gestion 210.

Alternativement, le module de surveillance 218 peut être configuré pour surveiller, pour chaque objet connecté 202ᵢ, un signal de présence que ledit objet connecté 202ᵢ lui envoie, de manière continue ou à une fréquence donnée, pour déterminer si ledit objet connecté 202ᵢ est joignable ou non par l'unité de gestion 210.

L'unité de gestion 210 peut en outre comprendre :
- des moyens de mémorisation (non représentés),
- une interface de communication (non représentée), filaire ou sans, avec chaque objet connecté 202ᵢ ; et
- éventuellement, une interface de communication (non représentée), filaire ou sans fil, avec un autre réseau, tel que le réseau Internet 208,
- etc.

Dans l'exemple représenté sur la FIGURE 2, l'unité de gestion 210 est intégrée dans un appareil dédié, indépendant des objets connectés, et ne réalisant aucune autre tâche.

La FIGURE 3 est une représentation schématique d'un autre exemple de réalisation non limitatif d'un système de mutualisation de ressources entre des objets connectés formant un réseau local.

Le système 300, représenté sur la FIGURE 3, peut être utilisé pour la mise en oeuvre d'un procédé partage de ressources au sein d'un réseau local d'objets connectés, en particulier le procédé 100 de la FIGURE 1 ou de l'une quelconque des alternatives décrites plus haut.

Le système 300 comprend tous les éléments du système 200 de la FIGURE 2, sauf en ce qui concerne les différences indiquées ci-dessous.

Dans le système 300 de la FIGURE 3, l'unité de gestion 210 est intégrée dans l'objet connecté 202₃.

Suivant encore une autre alternative, l'unité de gestion peut être intégrée dans un autre appareil tel que par exemple un point d'accès à Internet, un switch, etc.

De manière générale, l'invention n'est pas limitée aux exemples détaillés ci-dessus en référence aux FIGURES et la portée de la présente invention est donnée par les revendications.

## Revendications

1. Procédé (100), mis en oeuvre par ordinateur, de partage de ressources entre des objets connectés (202₁-202₃) formant un réseau local (204), ledit procédé (100) mettant en oeuvre une unité de gestion (210) connectée auxdits objets connectés (202₁-202₃) au sein dudit réseau local (204) et pilotant le partage de ressources à l'aide d'une liste de ressource(s) partagée(s) (LRP1,LRP2) par chacun desdits objets connectés (202₁-202₃) au sein dudit réseau local (204), ledit procédé (100) comprenant au moins une itération des étapes suivantes pour au moins un desdits objets connectés (202ᵢ) lesdites étapes étant mises en oeuvre par ladite unité de gestion
- surveillance (102) de l'état de connexion, à ladite unité de gestion (210), de chaque objet connecté (202ᵢ) pour déterminer si ledit objet connecté (202ᵢ) est joignable ou non, et
- en cas de changement de l'état de connexion de chaque objet connecté (202ᵢ), mise à jour (106,110,114) de ladite liste (LRP1,LRP2) lorsque ladite liste (LRP1,LRP2) mentionne une ressource partagée en relation avec ledit objet connecté (202ᵢ).

2. Procédé (100) selon l'une quelconque des revendications précédentes, **caractérisé en ce que** l'étape de surveillance (102) de l'état de connexion d'au moins un objet connecté (202ᵢ) est réalisée :
- à chaque réception d'une requête d'accès à une ressource partagée au sein du réseau local (204),
- à une fréquence donnée, et/ou
- en temps réel sous la forme d'une tâche de fond exécutée continuellement.

3. Procédé (100) selon l'une quelconque des revendications précédentes, **caractérisé en ce que** la surveillance de l'état de connexion (102) d'un objet connecté (202ᵢ) comprend :
- un test de l'accessibilité dudit objet connecté (202ᵢ), par exemple par une commande informatique de type Ping ; ou
- une surveillance d'un signal, dit de présence, émis par ledit objet connecté (202ᵢ).

4. Procédé (100) selon l'une quelconque des revendications précédentes, **caractérisé en ce que**, lorsque l'étape (102) de surveillance détermine qu'un objet connecté (202ᵢ) n'est pas joignable, l'étape de mise à jour comprend une modification (106), dans la liste, d'une donnée de disponibilité d'au moins une ressource partagée par ledit objet (202ᵢ), ou d'une ressource mise en partage avec ledit objet.

5. Procédé (100) selon l'une quelconque des revendications précédentes, **caractérisé en ce que**, lorsque :
- l'étape de surveillance (102) détermine qu'un premier objet connecté n'est pas joignable, et que
- une ressource dudit premier objet a été partagée avec un deuxième objet connecté ;
l'étape de mise à jour peut comprendre une modification (108) dudit partage.

6. Procédé (100) selon l'une quelconque des revendications précédentes, **caractérisé en ce que**, lorsque :
- l'étape de surveillance (102) détermine qu'un premier objet connecté n'est pas joignable, et que
- une ressource d'un deuxième objet a été partagée avec ledit premier objet connecté ;
l'étape de mise à jour peut comprendre une modification (112) dudit partage.

7. Procédé (100) selon l'une quelconque des revendications précédentes, **caractérisé en ce que** la liste de ressource(s) partagée(s) (LRP1,LRP2) comprend, pour au moins une ressource partagée par un objet connecté (202ᵢ), au moins une donnée relative à :
- une durée de disponibilité ;
- un horaire de disponibilité ;
- un taux de disponibilité ;
de ladite ressource.

8. Système (200;300) de partage de ressources entre objets connectés, comprenant :
- plusieurs objets connectés (202₁-202₃), interconnectés entre eux, et formant un réseau local (204), et
- une unité de gestion (210), connectée à chacun desdits objets connectés (202₁-202₃), au sein dudit réseau local (204) ;
configurés pour mettre en oeuvre toutes les étapes du procédé (100) selon l'une quelconque des revendications précédentes.

9. Système (200;300) selon la revendication précédente, **caractérisé en ce que** l'unité de gestion (210) est :
- formée par un appareil dédié (210) se trouvant au sein du réseau local (204), ou
- installée dans un objet connecté (202₃) se trouvant dans le réseau local (204) et réalisant au moins une autre tâche.

10. Système (200;300) selon l'une quelconque des revendications 8 ou 9, **caractérisé en ce qu'**au moins un objet connecté (202ᵢ) comporte un module logiciel (214ᵢ), dit client, pour déterminer au moins une donnée de disponibilité d'au moins une ressource dudit objet connecté (202ᵢ) et pouvant être partagée au sein du réseau local (204).

## Patentansprüche

1. Computerimplementiertes Verfahren (100) zum Teilen von Ressourcen zwischen verbundenen Objekten (202₁-202₃), die ein lokales Netzwerk (204) ausbilden, wobei das Verfahren (100) eine Verwaltungseinheit (210) ausführt, die mit den verbundenen Objekten (202₁-202₃) in dem lokalen Netzwerk (204) verbunden ist und die Teilung von Ressourcen unter Verwendung einer Liste von (einer) geteilten Ressource(n) (LRP1, LRP2) durch jedes der verbundenen Objekte (202₁-202₃) in dem lokalen Netzwerk (204) steuert, wobei das Verfahren (100) mindestens eine Iteration der folgenden Schritte für mindestens eines der verbundenen Objekte (202ᵢ) umfasst, wobei die Schritte durch die Verwaltungseinheit ausgeführt werden
- Überwachen (102) des Status der Verbindung, zu der Verwaltungseinheit (210), jedes verbundenen Objekts (202ᵢ), um zu bestimmen, ob das verbundene Objekt (202ᵢ) erreichbar ist oder nicht und
- im Falle einer Änderung des Status der Verbindung jedes verbundenen Objekts (202ᵢ), Aktualisieren (106,110,114) der Liste (LRP1,LRP2), wenn in der Liste (LRP1,LRP2) eine geteilte Ressource in Bezug auf das verbundene Objekt (202ᵢ) erwähnt wird.

2. Verfahren (100) nach einem der vorstehenden Ansprüche,
**dadurch gekennzeichnet, dass** der Schritt des Überwachens (102) des Status der Verbindung mindestens eines verbundenen Objekts (202ᵢ) durchgeführt wird:
- bei jedem Empfangen einer Anfrage nach Zugriff auf eine geteilte Ressource in dem lokalen Netzwerk (204),
- mit einer gegebenen Frequenz und/oder
- in Echtzeit in Form einer kontinuierlich ausgeführten Hintergrundaufgabe.

3. Verfahren (100) nach einem der vorstehenden Ansprüche,
**dadurch gekennzeichnet, dass** das Überwachen des Status (102) der Verbindung eines verbundenen Objekts (202ᵢ) umfasst:
- einen Test der Zugänglichkeit des verbundenen Objekts (202ᵢ), beispielsweise durch einen Computerbefehl einer Ping-Art; oder
- Überwachen eines Signals, das als Präsenzsignal bezeichnet wird, das von dem verbundenen Objekt (202ᵢ) gesendet wird.

4. Verfahren (100) nach einem der vorstehenden Ansprüche,
**dadurch gekennzeichnet, dass,** wenn der Überwachungsschritt (102) bestimmt, dass ein verbundenes Objekt (202ᵢ) nicht erreichbar ist, der Aktualisierungsschritt eine Modifikation (106), in der Liste, einer Angabe über die Verfügbarkeit mindestens einer von dem Objekt (202ᵢ) geteilten Ressource oder einer mit dem Objekt geteilten Ressource umfasst.

5. Verfahren (100) nach einem der vorstehenden Ansprüche,
**dadurch gekennzeichnet, dass,** wenn:
- der Überwachungsschritt (102) bestimmt, dass ein erstes verbundenes Objekt nicht erreichbar ist, und **dass**
- eine Ressource des ersten Objekts mit einem zweiten verbundenen Objekt geteilt ist;
der Aktualisierungsschritt eine Modifikation (108) der Teilung umfassen kann.

6. Verfahren (100) nach einem der vorstehenden Ansprüche,
**dadurch gekennzeichnet, dass,** wenn:
- der Überwachungsschritt (102) bestimmt, dass ein erstes verbundenes Objekt nicht erreichbar ist, und **dass**
- eine Ressource eines zweiten Objekts mit dem ersten verbundenen Objekt geteilt ist;
der Aktualisierungsschritt eine Modifikation (112) der Teilung umfassen kann.

7. Verfahren (100) nach einem der vorstehenden Ansprüche,
**dadurch gekennzeichnet, dass** die Liste der geteilte(n) Ressource(n) (LRP1, LRP2) für mindestens eine von einem verbundenen Objekt (202ᵢ) geteilte Ressource mindestens eine Angabe umfasst, die relativ ist zu:
- einer Dauer der Verfügbarkeit;
- einem Verfügbarkeitszeitplan;
- einer Verfügbarkeitsrate;
der Ressource.

8. System (200;300) zur Teilung von Ressourcen zwischen verbundenen Objekten, umfassend:
- mehrere verbundene Objekte (202₁-202₃), die untereinander verbunden sind und ein lokales Netzwerk (204) ausbilden, und
- eine Verwaltungseinheit (210), die mit jedem der innerhalb des lokalen Netzwerks (204) verbundenen Objekte (202₁-202₃) verbunden ist;
das konfiguriert ist, um sämtliche der Verfahrensschritte (100) nach einem der vorstehenden Ansprüche auszuführen.

9. System (200;300) nach dem vorstehenden Anspruch,
**dadurch gekennzeichnet, dass** die Verwaltungseinheit (210) Folgendes ist:
- durch eine dedizierte Einrichtung (210) ausgebildet, die sich in dem lokalen Netzwerk (204) befindet, oder
- in einem verbundenen Objekt (202s) eingerichtet, das sich in dem lokalen Netzwerk (204) befindet und mindestens eine weitere Aufgabe durchführt.

10. System (200;300) nach einem der Ansprüche 8 oder 9,
**dadurch gekennzeichnet, dass** mindestens ein verbundenes Objekt (202ᵢ) ein Softwaremodul (214ᵢ) aufweist, das als Client bezeichnet wird, zum Bestimmen mindestens einer Angabe über die Verfügbarkeit mindestens einer Ressource des verbundenen Objekts (202ᵢ) und die in dem lokalen Netzwerk (204) geteilt werden kann.

## Claims

1. A method (100) implemented by computer for sharing resources between connected objects (202₁-202₃) forming a local network (204), said method (100) implementing a management unit (210) connected to said connected objects (202₁-202₃) within said local network (204) and controlling the sharing of resources using a list of shared resource(s) (LRP1, LRP2) that are shared by each of said connected objects (202₁-202₃) within said local network (204), said method (100) comprising at least one iteration of the following steps for at least one of said connected objects (202ᵢ), said steps being implemented by said management unit
- monitoring (102) the connection status, to said management unit (210), of each connected object (202ᵢ) to determine whether said connected object (202ᵢ) is reachable or not, and
- in the event of a change in the connection status of each connected object (202ᵢ), updating (106, 110, 114) said list (LRP1, LRP2) when said list (LRP1, LRP2) mentions a shared resource related to said connected object (202i).

2. The method (100) according to any one of the preceding claims, **characterized in that** the step of monitoring (102) the connection status of at least one connected object (202ᵢ) is performed:
- each time a request is received to access a shared resource within the local network (204),
- at a given frequency, and/or
- in real time as a continuously running background task.

3. The method (100) according to any one of the preceding claims, **characterized in that** monitoring the connection status (102) of a connected object (202ᵢ) comprises:
- testing the accessibility of said connected object (202ᵢ), for example by a Ping-type computer command; or
- monitoring a presence signal emitted by said connected object (202ᵢ).

4. The method (100) according to any one of the preceding claims, **characterized in that,** when the monitoring step (102) determines that a connected object (202ᵢ) is unreachable, the update step comprises modifying (106), in the list, an availability datum of at least one resource shared by said object (202ᵢ), or a resource shared with said object.

5. The method (100) according to any one of the preceding claims, **characterized in that,** when:
- the monitoring step (102) determines that a first connected object is not reachable, and that
- a resource of said first object has been shared with a second connected object;
the update step may comprise modifying (108) said sharing.

6. The method (100) according to any one of the preceding claims, **characterized in that,** when:
- the monitoring step (102) determines that a first connected object is not reachable, and that
- a resource of a second object has been shared with said first connected object;
the update step may comprise modifying (112) said sharing.

7. The method (100) according to any one of the preceding claims, **characterized in that** the list of shared resource(s) (LRP1, LRP2) comprises, for at least one resource shared by a connected object (202ᵢ), at least one datum relating to:
- an availability period;
- an availability schedule;
- an availability rate;
of said resource.

8. A system (200; 300) for sharing resources between connected objects, comprising:
- several connected objects (202₁-202₃), interconnected with one another, and forming a local network (204), and
- a management unit (210), connected to each of said connected objects (202₁-202₃), within said local network (204);
configured to implement all the steps of the method (100) according to any one of the preceding claims.

9. The system (200; 300) according to the preceding claim,
**characterized in that** the management unit (210) is:
- formed by a dedicated device (210) within the local network (204), or
- installed in a connected object (202s) in the local network (204) and performing at least one other task.

10. The system (200; 300) according to any one of claims 8 or 9, **characterized in that** at least one connected object (202ᵢ) comprises a software module (214ᵢ), called client, for determining at least one item of availability data of at least one resource of said connected object (202ᵢ) and able to be shared within the local network (204).
